# EUROPÄISCHE PATENTSCHRIFT

(11) **EP 0 665 377 B1**
(45) Veröffentlichungstag und Bekanntmachung des Hinweises auf die Patenterteilung: **19.11.1997**
(21) Anmeldenummer: 94101298.1
(22) Anmeldetag: 28.01.1994
(51) Int. Cl.: F04B 39/16, B01D 45/08

(54) **Kompressoranlage**
Compressor unit
Compresseur

(43) Veröffentlichungstag der Anmeldung: 02.08.1995
(73) Patentinhaber: BAUER KOMPRESSOREN GmbH, D-81477 München (DE)
(72) Erfinder: Bauer, Heinz, D-81479 München (DE)
(74) Vertreter: Hering, Hartmut, Dipl.-Ing.

(56) Entgegenhaltungen:
- GB-A- 562 593
- US-A- 5 171 130

## Beschreibung

Die Erfindung befaßt sich mit einer Kompressoranlage, welche eine Kompressoreinheit und einen Kondensatfilter umfaßt, welcher zur Abscheidung von Wasser und Öl als Kondensat aus dem mittels der Kompressoreinheit verdichteten Gasstrom dient.

Bei einer derartigen Kompressoranlage wird das aus dem verdichteten Gasstrom, wie hier Druckluft, abgeschiedene Kondensat aus Wasser und Öl im Kondensatfilter aufgefangen und gesammelt. Von Zeit zu Zeit muß dieses Kondensat aus dem Kondensatfilter abgelassen werden, um die Funktionsfähigkeit des Kondensatfilters aufrechterhalten zu können. Da dieses Kondensat unter anderem Öl enthält, muß aufgrund der immer strenger werdenden Entsorgungsbestimmungen hierbei berücksichtigt werden, daß das Kondensat nicht einfach zur Umgebung abgeleitet wird, sondern einer speziellen für ölhaltigen Substanzen geeigneten Entsorgung zugeführt wird. Dies ist insbesondere mit Schwierigkeiten bei sogenannten transportablen Kompressoranlagen verbunden, die unter anderem beispielsweise zur Druckluftversorgung beim Tauchsport genutzt werden.

Es besteht daher ein Bedürfnis nach Kompressoranlagen, welche eine vereinfachte Entsorgung des Kondensats gestatten.

Die Erfindung zielt daher darauf ab, unter Überwindung der zuvor geschilderten Schwierigkeiten eine Kompressoranlage bereitzustellen, welche auf konstruktiv einfache aber effiziente Weise eine Kondensat-Entsorgung ermöglicht.

Nach der Erfindung wird hierzu eine Kompressoranlage mit einer Kompressoreinheit und einem Kondensatfilter zur Abscheidung von Wasser und Öl als Kondensat aus dem verdichteten Gasstrom bereitgestellt, welche in Anspruch 1 angegeben ist.

Bei der erfindungsgemäßen Kompressoranlage wird also der Filtratstrom vom Kondensatfilter in eine Filtereinrichtung eingeleitet, in welche das Kondensat aus Wasser und Öl mit Hilfe des Filtermaterials in der Filtereinrichtung aufgesaugt wird und dann der zuvor aufgewärmte Luftstrom das Wasser verdunstet, während Öl im Filtermaterial adsorbiert wird. Auf diese Weise wird bei der erfindungsgemäßen Kompressoranlage das Kondensat derart nachbehandelt, daß das Wasser verdunstet wird und das Öl weitgehend im Filtermaterial festgehalten ist. Hierdurch läßt sich die beim Arbeiten der Kompressoranlage anfallende Kondensatmenge mit Hilfe der Filtereinrichtung dadurch reduzieren, daß das Wasser mit Hilfe des Luftstroms verdunstet und abgeführt wird. Das Filtermaterial braucht nach wesentlich längeren Betriebszeiten ausgewechselt zu werden und es wird dann der bestimmungsgemäßen Entsorgung für ölhaltige Substanzen oder ggf. einer Regeneration zugeführt. Somit ermöglicht die erfindungsgemäße Kompressoranlage eine umweltschonende Nachbehandlung des hierbei anfallenden Kondensats.

Vorzugsweise wird das Filtermaterial von mehreren etwa parallel zueinander im Abstand aber etwa senkrecht zum durchgehenden Luftstrom angeordneten Filterelementen gebildet. Bei diesen Filterelementen kann es sich zweckmäßigerweise um solche handeln, die von spiralförmig gewickeltem Filtermaterial gebildet werden, wobei zweckmäßigerweise im Inneren ein Hohlraum vom Filtermaterial begrenzt wird.

Alternativ kann es sich bei den Filterelementen um an sich bekannte osmotische Filterstoffkerzen handeln.

Um die Filterelemente in etwa gleichem und vorbestimmtem Abstand zu halten, ist zweckmäßigerweise ein Abstandshalter vorgesehen. Bei den Filterelementen, die von spiralförmig gewickeltem Filtermaterial gebildet werden, ist hierzu vorzugsweise wenigstens eine Lochplatte vorgesehen, in deren Löcher die Filterelemente in vorbestimmter Weise angeordnet werden.

In einer Auslegung des Filterelements als osmotische Filterstoffkerze wird vorzugsweise ein Abstandshalter eingesetzt, welcher mehrere vorbestimmte zapfenförmige Vorsprünge hat, auf welche die jeweiligen Filterstoffkerzen als Filterelemente gesetzt werden.

Alternativ kann das Filtermaterial gewellt sein und in mehreren, beabstandeten Lagen in der Filtereinrichtung angeordnet sein. Das Filtermaterial ist vorzugsweise ein hochsaugfähiger Vliesstoff.

Wenn einzelne Filterelemente, welche beispielsweise aus osmotischen Filterstoffkerzen ausgebildet sind, als Filtermaterial eingesetzt werden, so werden die Filterelemente zur Verbesserung des Wirkungsgrades der Filtereinrichtung bei der Kompressoranlage nach der Erfindung in wenigstens zwei Reihen in Luftstromrichtung hintereinander angeordnet. Natürlich können auch mehr als zwei Reihen vorgesehen sein, was allerdings vom zur Verfügung stehenden Stauraum für die Filtereinrichtung abhängig ist. Auch hängt die vom Kondensatfilter anfallende Kondensatmenge von der Leistung der Kompressoreinheit bzw. der Gesamtleistung der Kompressoranlage ab. Die Filtereinrichtung wird natürlich hinsichtlich ihrer Wirkung auf die bei der jeweiligen Kompressoranlage vorhandenen Gegebenheiten abgestimmt.

Wenn die Filterelemente in wenigstens zwei oder mehreren Reihen hintereinander in Luftstromrichtung gesehen angeordnet sind, so ist die Auslegung vorzugsweise derart getroffen, daß die Filterelemente einer Reihe auf Lücke zu den Filterelementen einer benachbarten Reihe angeordnet sind. Hierdurch läßt sich bei möglichst gedrängter Bauweise der Filtereinrichtung ein günstiger Wirkungsgrad derselben erzielen.

In Abhängigkeit von der Bauform der Kompressoranlage wird als Warmluftstrom in der Filtereinrichtung Abluft oder Umluft genutzt.

Wenn die Kompressoranlage einen Kühlventilator enthält, mittels dem Umgebungsluft zur Kühlung über die Kompressoreinheit geleitet wird, wird dieser Luftstrom, der beim Vorbeigang an der Kompressoreinheit aufgewärmt wurde, vor seiner Ausleitung aus der Kompressoranlage als Abluft genutzt, welche das Filtermaterial in der Filtereinrichtung bei der Kompressoranlage nach der Erfindung überstreicht. Insbesondere Kompakt-Kompressoranlagen, wie solche die für den mobilen Einsatz, wie beim Tauchsport, bestimmt sind, umfassen einen solchen eingebauten Kühlventilator. In einer solchen Auslegung kann somit die durch die Kompressoreinheit aufgewärmte Luft abluftseitig bei der Filtereinrichtung nach der Erfindung für die Entsorgung des Kondensats genutzt werden.

Durch diese Doppelnutzung der erwärmten Abluft ist eine äußerst energiesparende und effiziente Funktion der Filtereinrichtung erreichbar.

Vorzugsweise erfolgt die Kondensatzuführung bei der Kompressoranlage nach der Erfindung in der Nähe des Bodens der Filtereinrichtungen, so daß eine Weiterleitung des Kondensats vom Kondensatfilter durch Schwerkraftunterstützung zur Filtereinrichtung bei der erfindungsgemäßen Kompressoranlage möglich ist.

Vorzugsweise umfaßt die Filtereinrichtung ein schalenförmiges und als Kondensatsammelschale ausgebildetes Gehäuse, in welchem das Filtermaterial angeordnet ist. Dieses Gehäuse ist vorzugsweise abluftseitig als Außenabschlußgehäuse bei der Kompressoranlage zusätzlich vorgesehen. Vorzugsweise wird hierbei die Höhenrichtung der Kompressoranlage für die effektiven Wirkflächen des Filtermaterials bzw. der Filterelemente genutzt, ohne daß sich die Bautiefe der Kompressoranlage in nennenswerter Weise vergrößert.

Vorzugsweise ist die erfindungsgemäße Kompressoranlage derart ausgelegt, daß die Filtereinrichtung in dieselbe integriert ist, so daß man eine Kompressoranlage in Kompakt-Bauweise erhält, wobei das Filtermaterial bzw. die Filterelemente in der Filtereinrichtung leicht zugänglich angeordnet sind.

Vorzugsweise ist die Filtereinrichtung mit dem darin enthaltenen Filtermaterial als insgesamt auswechselbare Kassette ausgebildet, so daß eine saubere Entsorgung des Filters gewärleistet ist. Diese Kassette kann dann in vorschriftsmäßiger Weise vernichtet oder regeneriert werden.

Natürlich ist die Erfindung nicht auf die angegebenen Einzelheiten der bevorzugten Ausführungsform beschränkt, sondern es können auch Kombinationen insbesondere hinsichtlich der Ausbildung des Filtermaterials in der Filtereinrichtung bei der erfindungsgemäßen Kompressoranlage eingesetzt werden.

Die Erfindung wird nachstehend anhand von bevorzugten Ausführungsformen unter Bezugnahme auf die beigefügte Zeichnung näher erläutert. Darin zeigt:
Figur 1 eine schematische Draufsicht auf eine Kompressoranlage nach der Erfindung in teilweise geschnittener Darstellung,
Figur 2 eine Längsschnittansicht des Bereichs der Filtereinrichtung bei der Kompressoranlage nach Figur 1 zur Verdeutlichung einer ersten Ausführungsform von Filterelementen in der in Figur 1 gezeigten Filtereinrichtung,
Figur 3 eine vergrößerte Ausschnittsansicht zur Verdeutlichung der Funktionsweise der Filtereinrichtung,
Figur 4 eine Figur lähnliche Draufsicht einer zweiten bevorzugten Ausführungsform einer Kompressoranlage mit integrierter Filtereinrichtung nach der Erfindung,
Figur 5 eine Längsschnittansicht durch die Filtereinrichtung in Figur 4 zur Verdeutlichung einer zweiten bevorzugten Ausführungsform von Filterelementen, und
Figur 6 eine vergrößerte Ausschnittsdarstellung von Figur 5 zur Verdeutlichung der Funktionsweise der Filterelemente.

In den Figuren der Zeichnung sind gleiche oder ähnliche Teile mit denselben Bezugszeichen versehen.

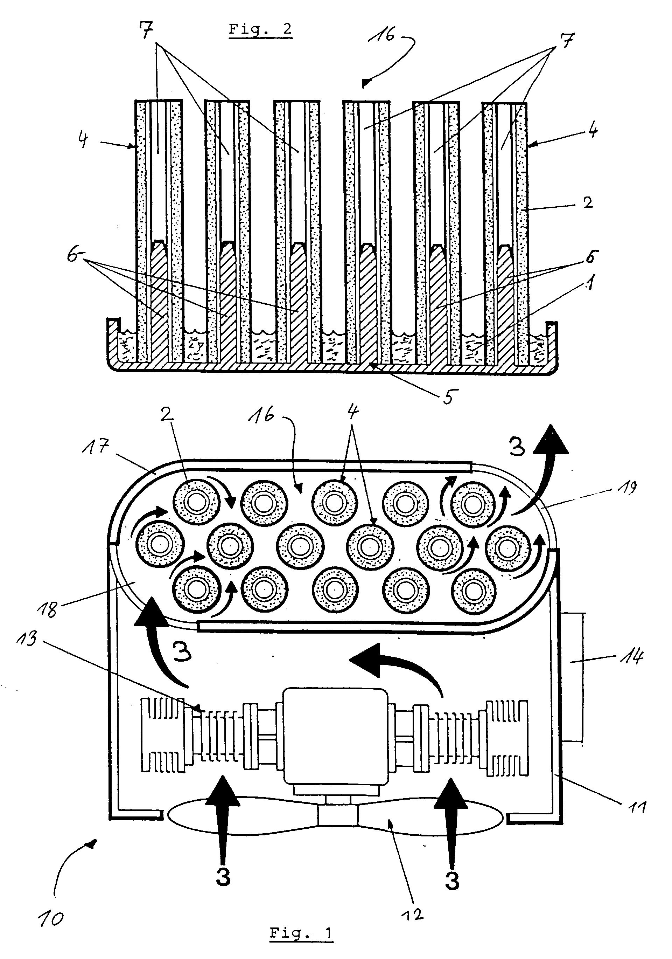

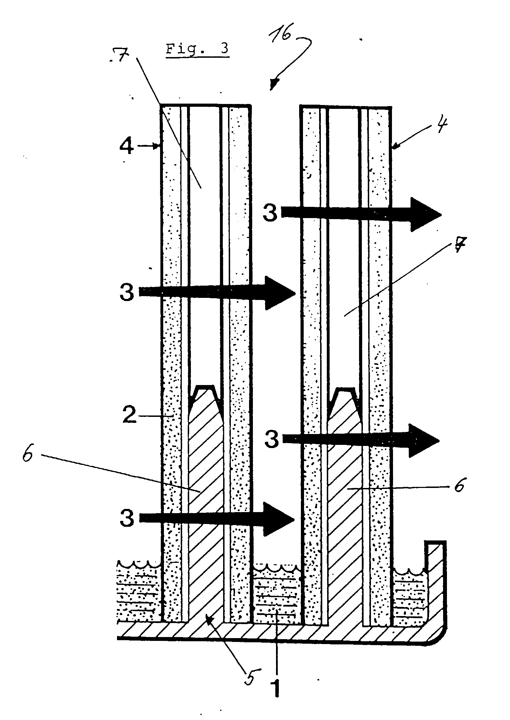

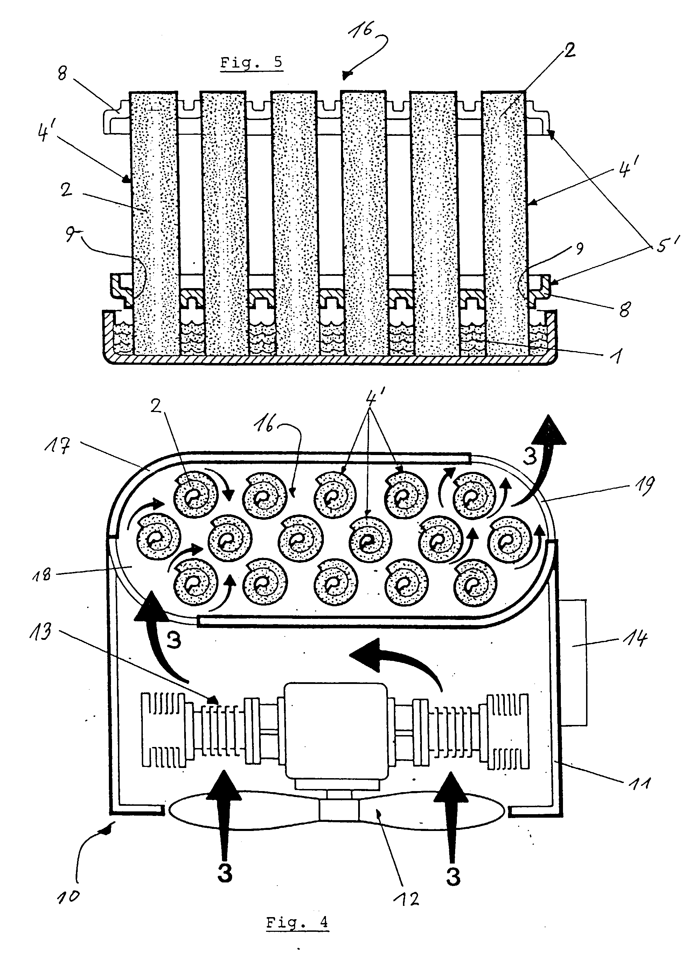

Aus Figur 1 und Figur 4 ist eine Kompressoranlage nach der Erfindung zu ersehen, welche insgesamt mit 10 bezeichnet ist. Bei dem dargestellten Beispiel handelt es sich um eine sogenannte kompakte Kompressoranlage, welche vorzugsweise für den mobilen Einsatz bestimmt ist. In einem schematisch dargestellten Gehäuse 11, welches etwa viereckig ausgestaltet ist, ist auf einer Längsseite ein Kühlventilator 12 angeordnet. Im Gehäuse 11 ist ferner eine schematisch angedeutete Kompressoreinheit 13 angeordnet. Hierbei kann es sich beispielsweise um eine Kompressoreinheit 13 der Hubkolbenbauart oder dergleichen handeln. Die Kompressoreinheit kann einstufig oder mehrstufig ausgelegt sein. Der von der Kompressoreinheit 13 gelieferte verdichtete Gasstrom, wie Druckluftstrom, wird zu einem schematisch angedeuteten Kondensatfilter 14 geleitet, in welchem auf an sich übliche Weise eine Abscheidung der flüssigen Bestandteile, wie Wasser und Öl, aus dem Druckgasstrom erfolgt, bevor der Druckgasstrom seiner vorbestimmten Nutzung zugeführt wird. Das am Kondensatfilter 14 anfallende Kondensat enthält überwiegend Öl und Wasser. Dieses mit 1 bezeichnete Kondensat wird in der Nähe eines Bodens einer insgesamt mit 16 bezeichneten Filtereinrichtung eingeleitet und sammelt sich wie aus den Figuren 2 und 3 sowie 5 und 6 zu ersehen ist, auf einem schalenförmigen Gehäuseteil 17 der Filtereinrichtung 16, welches als Sammelschale dient. In der Filtereinrichtung 16 ist ein insgesamt mit 2 bezeichnetes Filtermaterial angeordnet, welches die Fähigkeit hat, daß es das Kondensat aus Wasser und Öl in der Filtereinrichtung 16 aufsaugt und auf eine große Oberfläche innerhalb der Filtereinrichtung 16 verteilt wird.

Wie aus den Figuren 1 und 4 und den dort gezeigten Pfeilen, wie hier das Bezugszeichen 3, zu ersehen ist, wird die vom Kühlventilator 12 geförderte Umgebungsluft über die Kompressoreinheit 13 geleitet, von der sie aufgewärmt wird. Nach dem Vorbeigang an der Kompressoreinheit 13 wird der so aufgewärmte Luftstrom 3 über einen Lufteinlaß 18 beispielsweise auf der linken Seite in den Figuren 1 und 4 in die Filtereinrichtung 16 eingeleitet. Der so aufgewärmte Luftstrom 3 überstreicht die Außenflächen des Filtermaterials 2, wodurch das Wasser im vom Filtermaterial 2 aufgesaugten Kondensat verdunstet wird. Die ölhaltigen Bestandteile werden vom Filtermaterial 2 absorbiert und festgehalten. Nach dem Durchgang des Luftstroms durch die Filtereinrichtung 16, in welcher das Filtermaterial 2 als Schikane wirkt, tritt die Abluft des Kühlventilators 12 über einen Luftaustritt 19 aus, welcher beispielsweise in den Figuren 1 und 4 auf der rechten Seite, d. h. so weit wie möglich versetzt zum Lufteinlaß 18 vorgesehen ist. Die mit Hilfe des Luftstroms 3 in der Filtereinrichtung 16 verdunstete Flüssigkeit wird von diesem Luftstrom mitgerissen und zur Umgebung abgegeben. Die ölhaltigen Substanzen bleiben aber am Filtermaterial 2 zurück, so daß der die Filtereinrichtung 16 verlassende Luftstrom ohne Umweltbelastung zur Umgebung abgegeben werden kann. Bei dieser Bauform der Kompressoranlage 10 wird somit die durch die Kompressoreinheit 13 erwärmte Luft abluftseitig zur Kondensat-Entsorgung genutzt.

Anhand den Figuren 1 bis 3 wird eine erste bevorzugte Ausführungsform eines Filtermaterials 2 in der Filtereinrichtung 16 verdeutlicht. Das Filtermaterial 2 umfaßt mehrere, einzelne Filterelemente, welche beispielsweise als an sich bekannte osmotische Filterstoffkerzen ausgebildet sind. Aus Figur 1 ist zu ersehen, daß diese Filterelemente 4 in drei Reihen in Richtung des Luftstroms 3 gesehen hintereinander im Innenraum der Filtereinrichtung 16 angeordnet sind. Die Filterelemente 4 einer Reihe sind beispielsweise auf Lücke zu den Filterelementen 4 einer benachbarten Reihe angeordnet. Die Filterelemente 4 sind zweckmäßiger Weise in regelmäßigen Abständen pro jeweiliger Reihe angeordnet, wozu ein Abstandshalter 5 vorgesehen sein kann, welcher zapfenförmige Vorsprünge 6 hat, auf welche sich die Filterelemente 4 stecken lassen. Diese zapfenförmigen Vorsprünge 6 sind zweckmäßiger Weise an einem der Gehäuseteile der Filtereinrichtung 16 angeformt. Der Luftstrom 3 geht an den Filterelementen 4 vorbei und durch dieselbe, und das aufgrund der osmotischen Wirkung des Filterelements 4 in demselben aufsteigende Kondensat wird durch den Luftstrom 3 getrocknet, d. h. das im Kondensat 15 enthaltene Wasser wird verdunstet bzw. verdampft und dann vom Luftstrom 3 mitgerissen.

Anhand den Figuren 4 bis 6 wird eine zweite bevorzugte Ausführungsform eines Filtermaterials 2 in der Filtereinrichtung 16 bei der Kompressoranlage 10 nach der Erfindung verdeutlicht. Die dort gezeigten Filterelemente 4' sind spiralförmig aus Filtermaterial 2 gewickelt. Die Anordnung dieser Filterelemente 4' ist im wesentlichen ähnlich wie bei der voranstehend erläuterten Ausführungsform getroffen. Jedes Filterelement 4' ist derart aus Filtermaterial 2 gewickelt, daß etwa in der Mitte ein Hohlraum 7 vorhanden ist.

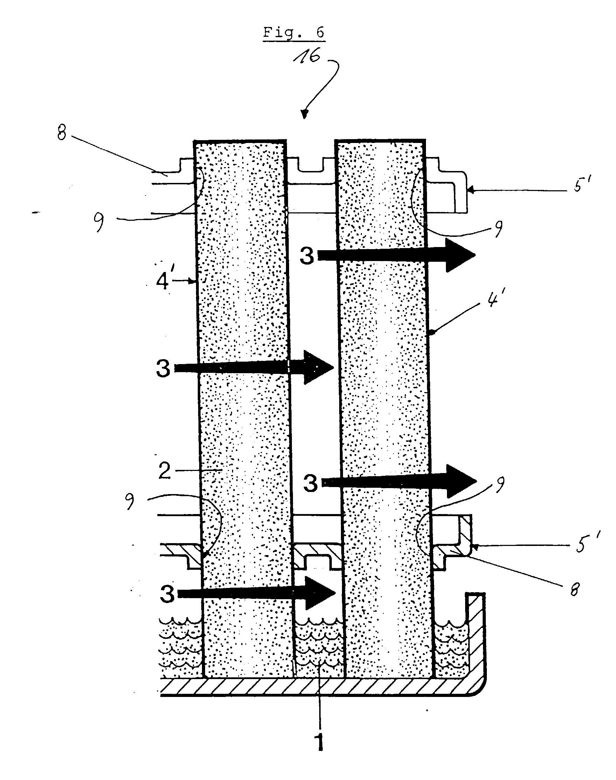

Wie aus den Figuren 5 und 6 zu ersehen ist, sind als Abstandshalter 5' zwei im Abstand angeordnete Lochplatten 8 vorgesehen, welche in vorbestimmter Anordnung Öffnungen 9 haben, in welche die Filterelemente 4' jeweils eingesetzt werden. Mit Hilfe dieser Lochplatten 8 sind die Filterelemente 4' beispielsweise in der in Figur 4 in Draufsicht gezeigten Anordnung in der Filtereinrichtungt 16 vorgesehen.

Wie mit Pfeilen 3 insbesondere aus Figur 6 zu ersehen ist, ist die Funktion der Filterelemente 4' im wesentlichen gleich wie bei den zuvor erläuterten Filterelementen 4.

Obgleich die Erfindung voranstehend anhand von bevorzugten Ausführungsformen erläutert wurde, ist die Erfindung natürlich nicht auf die dort beschriebenen Einzelheiten beschränkt, sondern es sind zahlreiche Abänderungen und Modifikationen möglich, die der Fachmann im Bedarfsfall treffen wird, ohne den Erfindungsgedanken zu verlassen. Insbesondere kann in Abweichung von den dargestellten Ausführungsformen das Filtermaterial 2 in der Filtereinrichtung 16 ggf. in gewellter Form vorliegen und in Form von mehreren in Richtung des Luftstroms 3 hintereinander liegenden, beabstandeten Lagen angeordnet sein. Auch ist die Erfindung nicht auf die integrierte Anordnung der gezeigten Filtereinrichtung 16 beschränkt, sondern in Abhängigkeit von der Bauform der Kompressoranlage 10 kann auch eine andere Anordnungsweise vorgesehen werden, bei der beispielsweise die Filtereinrichtung 16 ein gesondertes Bauteil in einer Kompressoranlage bildet. Eine solche Auslegung ist insbesondere für große Kompressoranlagen zweckmäßig. Wesentlich nach der Erfindung ist es, daß das bei der Kompressoranlage anfallende Kondensat, welches Öl und Wasser enthält, derart entsorgt wird, daß die für die Umwelt unschädlichen Bestandteile vorzugsweise mittels Verdunsten bzw. Verdampfen mit Hilfe der Filtereinrichtung 16 entfernt werden, während die hinsichtlich der Entsorgung kritischen Bestandteile wie Öl oder dergleichen, aus dem Kondensatstrom separiert und absorbiert werden. Hierdurch wird insbesondere eine leicht zu handhabende und die immer strenger werdenden Vorschriften erfüllende Entsorgung von Kondensat bei derartigen Kompressoranlagen 10 bereitgestellt. Zweckmäßigerweise ist die Filtereinrichtung als eine auswechselbare Kassette ausgebildet, welche dann benutzerfreundlich ausgewechselt und in bestimmungsgemaßer Weise abschließend entsorgt werden kann. Die Kassette dient als eine Einweg-Einrichtung für die umweltfreundliche Entsorgung des Kondensats.

## Patentansprüche

1. Kompressoranlage mit einer Kompressoreinheit (13) und einem Kondensatfilter (14) zur Abscheidung von Wasser und Öl als Kondensat aus dem verdichteten Gasstrom, **dadurch gekennzeichnet**, daß eine ein Filtermaterial (2) enthaltende, weitere Filtereinrichtung (16), der das Kondensat nach Durchgang durch den Kondensatfilter (14) zugeführt wird derart angeordnet ist, daß ein durch Überstreichen der Kompressoreinheit (13) aufgewärmter Luftstrom (3) das in Kondensat enthaltene Wasser in der weiteren Filtereinrichtung (16) verdunstet.

2. Kompressoranlage nach Anspruch 1, dadurch gekennzeichnet, daß das Filtermaterial (2) von mehreren, etwa parallel zueinander im Abstand, aber etwa senkrecht zum durchgehenden Luftstrom (3) angeordneten Filterelementen (4, 4'), gebildet wird.

3. Kompressoranlage nach Anspruch 2, **gekennzeichnet durch** einen Abstandshalter (5, 5') für die Filterelemente (4, 4').

4. Kompressoranlage nach Anspruch 3, **dadurch gekennzeichnet**, daß der Abstandshalter (5') von wenigstens einer Lochplatte (8) gebildet wird.

5. Kompressoranlage nach einem der Ansprüche 2 bis 4, dadurch gekennzeichnet, daß das Filterelement (4') von spiralförmig gewickeltem Filtermaterial (2) gebildet wird.

6. Kompressoranlage nach Anspruch 5, dadurch gekennzeichnet, daß das Filterelement (4') im Inneren einen Hohlraum (7) begrenzt.

7. Kompressoranlage nach einem der Ansprüche 1 bis 4, dadurch gekennzeichnet, daß das Filterelement (4) als osmotische Filterstoffkerze ausgebildet ist.

8. Kompressoranlage nach Anspruch 7, dadurch gekennzeichnet, daß ein Abstandshalter (5) vorgesehen ist, welcher mehre zapfenförmige Vorsprünge (6) hat, welche in den Innenraum der jeweiligen Filterstoffkerze ragen.

9. Kompressoranlage nach Anspruch 1, dadurch gekennzeichnet, daß das Filtermaterial gewellt ist und in mehreren, beabstandeten Lagen angeordnet ist.

10. Kompressoranlage nach einem der vorangehenden Ansprüche, dadurch gekennzeichnet, daß das Filtermaterial (2) ein hochsaugfähiger Vliesstoff ist.

11. Kompressoranlage nach einem der vorangehenden Ansprüche, dadurch gekennzeichnet, daß Abluft oder Umluft das Filtermaterial (2) in der weiteren Filtereinrichtung (16) überstreicht.

12. Kompressoranlage nach einem der Ansprüche 2 bis 8 oder 10 oder 11, dadurch gekennzeichnet, daß die Filterelemente (4, 4') in wenigstens zwei Reihen in Luftstromrichtung (3) hintereinander angeordnet sind.

13. Kompressoranlage nach Anspruch 12, dadurch gekennzeichnet, daß die Filterelemente (4, 4') einer Reihe auf Lücke zu den Filterelementen (4, 4') einer benachbarten Reihe angeordnet sind.

14. Kompressoranlage nach einem der vorangehenden Ansprüche, dadurch gekennzeichnet, daß die Kondensatzuführung in der Nähe des Bodens der weiteren Filtereinrichtung (16) erfolgt.

15. Kompressoranlage nach einem der vorangehenden Ansprüche, dadurch gekennzeichnet, daß die weitere Filtereinrichtung (16) ein schalenförmiges und als Kondensatsammelschale ausgebildetes Gehäuse (17) umfaßt, in welchem das Filtermaterial (2) angeordnet ist.

16. Kompressoranlage nach einem der vorangehenden Ansprüche, dadurch gekennzeichnet, daß die weitere Filtereinrichtung (16) in die Kompressoranlage (10) integriert ist.

17. Kompressoranlage nach einem der vorangehenden Ansprüche, dadurch gekennzeichnet, daß der Lufteintritt (18) und der Luftaustritt (19) der weiteren Filtereinrichtung (16) versetzt zueinander vorgesehen sind.

18. Kompressoranlage nach Anspruch 11, dadurch gekennzeichnet, daß die Abluft von einem Kühlventilator (12) nach Überstreichen der Kompressoreinheit (13) und zur weiteren Filtereinrichtung (16) geht.

19. Kompressoranlage nach einem der vorhergehenden Ansprüche, dadurch gekennzeichnet, daß die weitere Filtereinrichtung (16) mit dem darin enthaltenen Filtermaterial (2) als insgesamt auswechselbare Kassette ausgebildet ist.

## Claims

1. Compressor plant having a compressor unit (13) and a condensate filter (14) for separation of water and oil as condensate from the compressed gas stream, characterised in that a further filter device (16) containing a filter material (2), to which the condensate is passed after passing through the condensate filter (14), is arranged such that an air stream (3) heated by brushing the compressor unit (13) evaporates the water present in the condensate in the further filter device (16).

2. Compressor plant according to claim 1, characterised in that the filter material (2) is formed by several filter elements (4, 4') arranged approximately parallel to one another at a distance, but approximately vertical to the air stream (3) passing through.

3. Compressor plant according to claim 2, characterised by a distancer (5, 5') for the filter elements (4, 4').

4. Compressor plant according to claim 3, characterised in that the distancer (5') is formed by at least one perforated plate (8).

5. Compressor plant according to one of claims 2 to 4, characterised in that the filter element (4') is formed by spirally wound filter material (2).

6. Compressor plant according to claim 5, characterised in that the filter element (4') defines a cavity (7) in the interior.

7. Compressor plant according to one of claims 1 to 4, characterised in that the filter element (4) is designed as an osmotic filter material cartridge.

8. Compressor plant according to claim 7, characterised in that a distancer (5) is provided which has several journal-like projections (6) which project into the interior of the particular filter material cartridge.

9. Compressor plant according to claim 1, characterised in that the filter material is corrugated and is arranged in several spaced layers.

10. Compressor plant according to one of the preceding claims, characterised in that the filter material (2) is a highly absorbent nonwoven material.

11. Compressor plant according to one of the preceding claims, characterised in that waste air or circulating air brushes the filter material (2) in the further filter device (16).

12. Compressor plant according to one of claims 2 to 8 or 10 or 11, characterised in that the filter elements (4, 4') are arranged in at least two rows one behind another in the air stream direction (3).

13. Compressor plant according to claim 12, characterised in that the filter elements (4, 4') of a row are arranged on gaps with the filter elements (4, 4') of a neighbouring row.

14. Compressor plant according to one of the preceding claims, characterised in that the condensate is supplied in the vicinity of the base of the further filter device (16).

15. Compressor plant according to one of the preceding claims, characterised in that the further filter device (16) comprises a bowl-like housing (17) designed as a condensate collecting bowl in which the filter material (2) is arranged.

16. Compressor plant according to one of the preceding claims, characterised in that the further filter device (16) is integrated in the compressor plant (10).

17. Compressor plant according to one of the preceding claims, characterised in that the air inlet (18) and the air outlet (19) of the further filter device (16) are arranged to be offset with respect to one another.

18. Compressor plant according to claim 11, characterised in that the waste air from a cooling ventilator (12) after brushing the compressor unit (13) and goes to the further filter device (16).

19. Compressor plant according to one of the preceding claims, characterised in that the further filter device (16) with the filter material (2) contained therein is designed as a cassette which can be exchanged as a whole.

## Revendications

1. Compresseur comportant une unité de compression (13) et un filtre à condensat (14) destiné à extraire de l'eau et de l'huile, sous forme de condensat, d'un courant de gaz comprimé, caractérisé en ce qu'un dispositif additionnel de filtration (16) qui contient une matière de filtration (2) et qui est alimenté en condensat, une fois passé dans le filtre à condensat (14), est monté de façon qu'un courant d'air (3), chauffé en passant dans l'unité de compression (13), fait s'évaporer, dans le dispositif additionnel de filtration (16), l'eau contenue dans le condensat.

2. Compresseur suivant la revendication 1, caractérisé en ce que la matière de filtration (2) comporte plusieurs éléments de filtre (4, 4') parallèles et écartés, mais sensiblement perpendiculaires au courant de gaz (3) qui les traverse.

3. compresseur suivant la revendication 2, caractérisé par un dispositif d'écartement (5, 5') pour les éléments de filtre (4, 4').

4. Compresseur suivant la revendication 3, caractérisé en ce que le dispositif d'écartement (5') est formé d'au moins une plaque perforée (8).

5. Compresseur suivant l'une des revendications 2 à 4, caractérisé en ce que l'élément de filtre (4') est formé d'une matière de filtration (2) enroulée en spirale.

6. Compresseur suivant la revendication 5, caractérisé en ce que l'élément de filtre (4) limite au dedans une chambre creuse (7).

7. Compresseur suivant l'une des revendications 1 à 4, caractérisé en ce que l'élément de filtre (4) a la forme d'une bougie de tissu filtrant osmotique.

8. Compresseur suivant la revendication 7, caractérisé en ce qu'est prévu un dispositif d'écartement (5) qui comporte plusieurs tiges en forme de broches (6) qui sont en saillie dans la chambre intérieure de chaque bougie en tissu filtrant.

9. Compresseur suivant la revendication 1, caractérisé en ce que la matière de filtration est ondulée et est disposée en plusieurs couches distantes.

10. Compresseur suivant l'une des revendications précédentes, caractérisé en ce que la matière de filtration (2) est une étoffe nappée très absorbante.

11. Compresseur suivant l'une des revendications précédentes, caractérisé en ce que l'air d'évacuation ou l'air en circulation passent sur la matière de filtration (2) dans le dispositif additionnel de filtration (16).

12. Compresseur suivant l'une des revendications 2 à 8 ou 10 ou 11, caractérisé en ce que les éléments de filtre (4, 4') sont disposés suivant au moins deux rangées l'une derrière l'autre, dans le sens du courant de gaz (3).

13. Compresseur suivant la revendication 12, caractérisé en ce que les éléments de filtre (4, 4') d'une rangée sont disposés en quinconce par rapport aux éléments de filtre (4, 4') d'une rangée voisine.

14. Compresseur suivant l'une des revendications précédentes, caractérisé en ce que l'alimentation en condensat a lieu dans le voisinage du fond du dispositif additionnel de filtration (16).

15. Compresseur suivant l'une des revendications précédentes, caractérisé en ce que le dispositif additionnel de filtration (16) comporte un carter (17) en forme de cuvette ayant la forme d'un collecteur de condensat, dans lequel est disposée la matière de filtration (2).

16. Compresseur suivant l'une des revendications précédentes, caractérisé en ce que le dispositif additionnel de filtration (16) est intégré dans le compresseur (10).

17. Compresseur suivant l'une des revendications précédentes, caractérisé en ce que l'entrée d'air (18) et la sortie d'air (19) du dispositif additionnel de filtration (16) sont prévues décalées l'une par rapport à l'autre.

18. Compresseur suivant la revendication 11, caractérisé en ce que l'air d'évacuation d'un ventilateur de refroidissement (12) va, après passage sur l'unité de compression (13), au dispositif additionnel de filtration (16).

19. Compresseur suivant l'une des revendications précédentes, caractérisé en ce que le dispositif additionnel de filtration (16), avec, la matière de filtration (2) qu'il contient, a, dans l'ensemble, la forme d'une cassette échangeable.
